# EUROPÄISCHE PATENTSCHRIFT

(11) **EP 1 064 575 B1**
(45) Veröffentlichungstag und Bekanntmachung des Hinweises auf die Patenterteilung: **03.07.2002**
(21) Anmeldenummer: 99922064.3
(22) Anmeldetag: 23.03.1999
(51) Int. Cl.: G02B 6/255

(54) **VERFAHREN ZUM SPLEISSEN VON LICHTWELLENLEITERN UND SPLEISSVORRICHTUNG**
METHOD FOR SPLICING WAVEGUIDES AND SPLICING DEVICE
DISPOSITIF PERMETTANT D'EPISSURER DES GUIDES D'ONDES ET PROCEDE D'EPISSURAGE

(30) Priorität: 27.03.1998 DE 19813755
(43) Veröffentlichungstag der Anmeldung: 03.01.2001
(60) Teilanmeldung: 01116336.7
(73) Patentinhaber: SIEMENS AKTIENGESELLSCHAFT, 80333 München (DE)
(72) Erfinder: MÜSSIG, Dirk, D-81379 München (DE)
(86) Internationale Anmeldenummer: DE9900850
(87) Internationale Veröffentlichungsnummer: WO9950698

(56) Entgegenhaltungen:
- EP-A- 0 576 266
- EP-A- 0 864 890
- US-A- 4 049 414
- PATENT ABSTRACTS OF JAPAN vol. 014, no. 179 (P-1034), 10. April 1990 (1990-04-10) & JP 02 028605 A (FURUKAWA ELECTRIC CO LTD:THE), 30. Januar 1990 (1990-01-30)
- WENXIN ZHENG: "REAL TIME CONTROL OF ARC FUSION FOR OPTICAL FIBER SPLICING" JOURNAL OF LIGHTWAVE TECHNOLOGY, Bd. 11, Nr. 4, 1. April 1993 (1993-04-01), Seiten 548-553, XP000378009 ISSN: 0733-8724
- DATABASE WPI Section PQ, Week 9409 Derwent Publications Ltd., London, GB; Class P81, AN 94-073392 XP002114156 & SE 9 201 817 A (TELEFONAKTIEBOLAGET ERICSSON L M), 13. Dezember 1993 (1993-12-13)

## Beschreibung

Die Erfindung bezieht sich auf ein Verfahren zum Spleißen von Lichtwellenleitern gemäß dem Oberbegriff des Patentanspruchs 1 und eine Spleißvorrichtung gemäß dem Oberbegriff des Patentanspruchs 5.

Zum Verbinden der in der optischen Nachrichtentechnik verstärkt eingesetzten Lichtwellenleitern (Glas- oder Polymerfasern) sind zwei Verfahren bekannt: zum einen das Einkleben von Enden der Lichtwellenleiter in konvektionierte und genormte Stecker und zum anderen das Verspleißen von Lichtwellenleitern mit präparierten Endflächen zu einem einzigen Lichtwellenleiter. Beim Verspleißen der Lichtwellenleiter in Spleißvorrichtungen werden zwei Lichtwellenleiter mit präparierter Endfläche auf zwei Haltevorrichtungen befestigt, die dann mit Justiereinrichtungen verfahren werden können, damit die Endflächen gut zueinander justiert werden. Nach der Justage werden die beiden Enden dann im allgemeinen thermisch verschweißt. Das thermische Verschweißen erfolgt dabei über eine Bogenentladung zwischen zwei Elektroden.

Aus US 4 506 947 ist ein Verfahren bekannt, bei dem über eine Videokamera die Justage von zwei Glasfasern zueinander kontrolliert wird, indem die Spleißstelle mit ultraviolettem Licht beleuchtet wird, so daß der mit Germanium dotierte Kern der Glasfasern Licht im sichtbaren Wellenlängenbereich emittiert. Das Licht wird über die Videokamera und eine nachgeschaltete Bildauswerteeinheit auf einem Monitor dargestellt. Der Bediener der Vorrichtung kann daher die Kerne der beiden Glasfasern über die Monitoreinrichtung und die Justiereinrichtung zueinander justieren. Die Qualität des Spleißvorgangs wird nicht beobachtet.

Die Qualität eines Spleißes zur Erzielung möglichst geringer optischer Verluste bei der Lichtübertragung von einem in den anderen Lichtwellenleiter, ist wesentlich von den in der Spleißvorrichtung eingestellten Parametern abhängig. Zu diesen Parametern gehört auch der Entladungsstrom, mit dem die Lichtwellenleiter verschweißt werden. Bei optimaler Justage und gleichbleibenden Umweltbedingungen (Luftdruck, Luftfeuchte, Temperatur) erreicht man mit einem konstanten Entladungsstrom eine gleichbleibend gute Erwärmung. Bei veränderten Umweltbedingungen, gebrauchten oder verschmutzten Elektroden verändert sich auch bei einem konstanten Entladungsstrom die Erwärmung der Lichtwellenleiter, und damit die Qualität des Spleißes.

Aus DE 196 17 388 ist auf dem Gebiet der Materialbearbeitung von Werkstoffen mit Lasern ein Verfahren bekannt, die Temperaturverteilung in einem von einem Laser initiierten Plasma über Videosensoren auszuwerten. Das Plasma entspricht der Bogenentladung beim Spleißen, das Verfahren erlaubt aber keine Aussage darüber, wie die Temperaturverteilung im Lichtwellenleiter selbst und damit die Qualität des Spleißes ist.

Aus JP-A-02 028605 ist eine Vorrichtung zum Spleißen von Lichtwellenleitern bekannt, mittels welcher durch ein einfaches und geeignetes Anpassen einer elektrischen Entladung zwischen zwei Elektroden eine verlustarme Verbindung von Lichtwellenleitern herstellbar ist. Die Intensität und die Position der Entladung wird dadurch bestimmt, daß die Lichtausstrahlung zum Zeitpunkt des Spleißens der Enden der Lichtwellenleiter mittels eines optischen Bilderfassungssystems und eines Bildverarbeitungssystems bestimmt wird. Die Intensität und der Ort der Entladung relativ zu den Enden der zu verspleißenden Lichtwellenleitern können somit an die optimalem Bedingungen angepaßt werden.

Es ist Aufgabe der Erfindung, die Temperatur für einen Spleißvorgang anhand der von einem Sensor erfaßten Lichtausstrahlung automatisiert zu regeln, wobei für eine erforderliche Bildverarbeitung der erfaßten Lichtausstrahlung möglichst wenig Speicherplatz benutzt werden soll.

Die Aufgabe wird gelöst durch ein Verfahren und eine Spleißvorrichtung der eingangs genannten Art mit den kennzeichnenden Merkmalen des Patentanspruchs 1 bzw. des Patentanspruchs 5.

Dazu werden einer Ist-Intensitätsverteilung und einer Referenz-Intensitätsverteilung Grauwerte zugeordnet, die Grauwerte entlang der Richtung der Achsen der beiden zu verspleißenden Lichtwellenleiter ausgewertet, für die Referenz-Intensitätsverteilung eine Referenz-Position (x1) in der Richtung der beiden Lichtwellenleiter abgespeichert, bei der ein vorgegebener Grauwert erreicht wird, beim Spleißen eine dabei erzielte Ist-Position (x2), bei der der vorgegebene Grauwert erreicht wird, mit der Referenz-Position (x1) verglichen und im Fall einer Abweichung der Entladungsstrom so geregelt, daß sich die Ist-Position (x2) der Referenz-Position (x1) zumindest annähert. Dadurch ergibt sich eine von Umgebungsparametern unabhängige automatisierte Regelung des Entladungsstrom, so daß Spleißvorgänge zu gleichen Temperaturverteilungen in den Lichtwellenleitern und damit zu einer gleichbleibend guten Qualität der Spleiße führen.

In vorteilhafter Weise wird nach Patentanspruch 2 der neu ermittelte, angepaßte Entladungsstrom für zukünftige Spleißvorgänge als voreingestellter Entladungsstrom abgespeichert.

In vorteilhafter Weise wird nach Patentanspruch 3 eine zeitlich Ist-Abfolge von Intensitätsverteilungen abgespeichert und mit einer abgespeicherten Referenz-Abfolge verglichen, um zu einer noch genaueren Aussage über die Temperaturverteilung während des Spleißvorganges zu gelangen.

Ein besonders reproduzierbares Verfahren wird nach Patentanspruch 4 dadurch erreicht, daß die zeitliche Abfolge durch das Anlegen des Entladungsstroms getriggert wird.

Bei der Spleißvorrichtung nach Anspruch 5 ist ein ein Sensor zur Erfassung einer beim Spleißen auftretenden ortsaufgelösten Ist-Intensitätsverteilung vorgesehen, welcher derart ausgebildet ist, daß der Ist-Intensitätsverteilung Grauwerte zugeordnet werden. Die Spleißvorrichtung umfaßt ferner eine Speichereinrichtung zum Abspeichern von Grauwerten einer ortsaufgelösten Referenz-Intensitätsverteilung,
eine Vergleichseinrichtung (14) zum Vergleichen der Grauwerte der Ist-Intensitätsverteilung mit den Grauwerten der Referenz-Intensitätsverteilung, wobei die Vergleichseinrichtung derart ausgebildet ist, daß die Grauwerte entlang der Richtung der beiden Lichtwellenleiter miteinander verglichen werden, und eine Regeleinrichtung (12) zur Nachregelung des Entladungsstroms.

Für einen einfachen Aufbau bei reduzierten Kosten ist der Sensor nach Anspruch 6 so ausgebildet, daß er auch zur Justage der Enden der Lichtwellenleiter verwendet wird.

Die Erfindung wird in Ausführungsbeispielen anhand der Figuren der Zeichnung näher erläutert. Dabei zeigen
Figur 1 einen schematischen Aufbau der erfindungsgemäßen Spleißvorrichtung zum Spleißen von Lichtwellenleitern,
Figur 2a schematisch die Intensitätsverteilung über die Längsachse der beiden Lichtwellenleiter bei einer ersten Temperaturverteilung und
Figur 2b schematisch die Intensitätsverteilung über die Längsachse der beiden Lichtwellenleiter bei einer zweiten Temperaturverteilung.

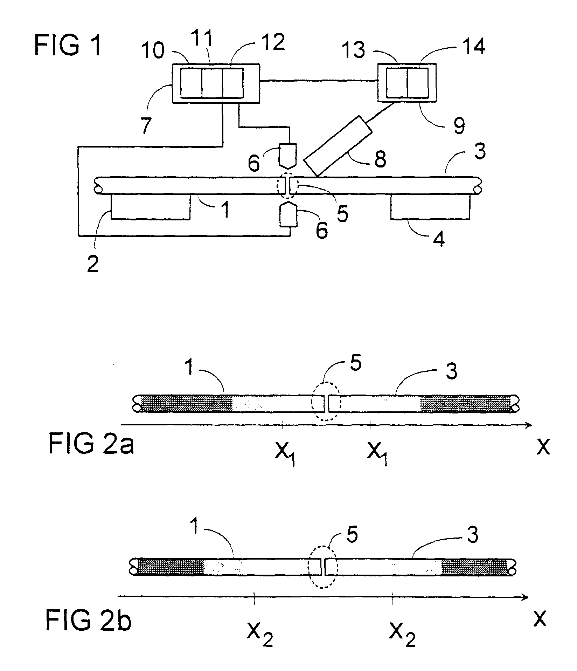

Gemäß Figur 1 wird zum Verspleißen das Ende eines ersten Lichtwellenleiters 1 auf einer ersten Haltevorrichtung 2 befestigt. Ein zweiter Lichtwellenleiter 3 wird auf einer zweiten Haltevorrichtung 4 befestigt. Die Haltevorrichtungen 2,4 dienen auch als Justiereinrichtungen, mit denen die beiden Enden der Lichtwellenleiter 1, 3 zueinander auf minimalen Versatz justiert werden, damit ein möglichst geringer zusätzlicher optischer Verlust an der Übergangsstelle (Spleißstelle) vom ersten Lichtwellenleiter 1 auf den zweiten Lichtwellenleiter 3 auftritt. Die beiden Enden der Lichtwellenleiter 1, 3 werden durch die Zündung eines Lichtbogens 5 zwischen zwei Elektroden 6 miteinander verschweißt. Die beiden Elektroden 6 werden dabei durch eine Steuer- und Regeleinrichtung 7, die eine Stromquelle 10 und einen zugeordneten Sollwertgeber 11 umfaßt, mit einem vorgegebenen Entladungsstrom beaufschlagt.

Erfindungsgemäß wird der Bereich des Lichtbogens 5 mit den Enden der Lichtwellenleiter 1,3 durch einen Sensor 8, beispielsweise eine Videokamera, aufgenommen und in einer nachgeschalteten Bildauswerteeinheit 9 ausgewertet. Die Bildauswerteeinheit 9 umfaßt dabei eine Speichereinrichtung 13 zum Abspeichern einer Referenz-Intensitätsverteilung und eine Vergleichseinrichtung 14 zum Vergleichen der Ist-Intensitätsverteilung mit der Referenz-Intensitätsverteilung. In Abhängigkeit des Vergleichs wird eine Regeleinrichtung 12 angesteuert, die ihrerseits den Entladungsstrom über den der Stromquelle 10 zugeordneten Sollwertgeber 11 so regelt, daß sich die Ist-Intensitätsverteilung der Referenz-Intensitätsverteilung zumindest annähert. Natürlich wird eine möglichst große Annäherung angestrebt, um eine reproduzierbare Qualität der Spleiße zu erhalten.

In vorteilhafter Weise läßt sich der Sensor 8 mit der nachgeschalteten Bildauswerteeinheit 9 auch für die Justage der Lichtwellenleiter verwenden, womit ein gegenüber einer Vorrichtung mit zwei Sensoren vereinfachter Aufbau der Spleißvorrichtung erzielt wird.

Eine automatische Verstärkungsregelung des Sensors 8 muß bei der Anwendung des Verfahrens ausgeschaltet sein, damit die Änderung der Intensität gemessen werden kann. Wird der Versatz der beiden Lichtwellenleiter zueinander durch in die Lichtwellenleiter eingekoppeltes Licht gemessen, so muß während des Spleißvorgangs dieses eingekoppelte Licht abgeschaltet werden, damit es die zu messende Intensitätsverteilung nicht beeinflußt.

Die Referenz-Intensitätsverteilung ist beispielsweise im Rahmen einer "Trainingsphase" ermittelt worden, bei der mit verschiedenen Entladungsströmen erzielte verschiedene Intensitätsverteilungen abgespeichert werden, die Qualität der daraus resultierenden Spleiße untersucht wird und anschließend die Intensitätsverteilung für den Spleiß mit den geringsten Verlusten als Referenz-Intensitätsverteilung und der dazugehörige Entladungsstrom als voreingestellter Entladungsstrom abgespeichert werden.

Beim Anlegen des voreingestellten Entladungsstroms beginnen die Enden der Lichtwellenleiter im Bereich des Lichtbogens 5 bereich zu glühen und damit im sichtbaren Bereich des Spektrums Licht zu emittieren. Die Temperaturverteilung in den Lichtwellenleitern wird ein Maximum im Bereich des Lichtbogens 5 aufweisen und in den Lichtwellenleitern 1, 3 mit größerer Entfernung vom Lichtbogen 5 abnehmen. Die Helligkeit der ausgestrahlten Glühemission wird mit größerer Entfernung zum Lichtbogen 5 ebenfalls abnehmen.

Bei veränderten Umgebungsparametern wird sich beim voreingestellten Entladungsstrom eine Ist-Intensitätsverteilung ergeben, die von der Referenz-Intensitätsverteilung abweicht. Der Entladungsstrom wird mit Hilfe der Regeleinrichtung 12 der Steuer- und Regeleinrichtung 7 solange verändert, bis sich die Ist-Intensitätsverteilung der Referenz-Intensitätsverteilung zumindest annähert. Bei gleicher Intensitätsverteilung liegen dann gleiche Temperaturverteilungen vor, so daß ein Spleiß mit den vorher bestimmten optimalen minimalen Verlusten erzielt wird.

Besonders ökonomisch in bezug auf die abzuspeichernde Datenmenge sind zwei Verfahren, die mit einer Schwarzweiß-Kamera auskommen. In der Schwarzweiß-Kameras als Sensor 8 werden den Intensitätsverteilungen Grauwerte zugeordnet.

Im ersten Verfahren werden die Grauwerte dabei über das gesamte Fenster der Schwarzweiß-Kamera als Sensor 8 gemittelt, und nur der mittlere Grauwert der Referenz-Intensitätsverteilung in der Speichereinrichtung 13 der Bildauswerteeinheit 9 abgespeichert werden. Bei einer höheren Temperatur als vorgesehen wird ein höherer mittlerer Grauwert der Ist-Intensitätsverteilung gemessen und dadurch wird der Entladungsstrom entsprechend nachgeregelt.

Ein zweites Verfahren mit Grauwerten ist in den Figuren 2a und 2b dargestellt. Dabei wird eine Referenz-Position x1, bei der ein vorgegebener Grauwert, hier dargestellt vom Übergang weiß in hellgrau, als Referenz-Intensitätsverteilung abgespeichert. Verändert sich die Temperatur bei weiteren Spleißvorgängen im Beispiel zu höheren Temperaturen, so wird die Position mit dem vorgegebenen Grauwert nun nach Figur 2b an einer Ist-Position x2 auftreten. Durch eine Regelung des Entladungsstroms und daraus folgend ein Verschieben der Ist-Position x2 in Richtung der Referenz-Position x1 wird in diesem Fall die ursprüngliche Temperaturverteilung erreicht.

Es können auch zeitliche Abfolgen von Intensitätsverteilungen aufgenommen und abgespeichert werden und dann während der Spleißvorgänge miteinander verglichen werden. Die zeitliche Abfolge der Aufnahmen wird dabei durch das Einschalten des Entladungsstroms getriggert.

Somit ergibt sich eine von Umgebungsparametern unabhängige automatisierte Regelung auf eine gleichmäßige Temperaturverteilung beim Spleißen von Lichtwellenleitern.

## Patentansprüche

1. Verfahren zum Spleißen von Lichtwellenleitern (1,3) durch eine durch einen Entladungsstrom gesteuerte Bogenentladung zwischen zwei Elektroden, wobei
bei einem voreingestellten Entladungsstrom die Bogenentladung gezündet wird,
eine ortsaufgelöste Ist-Intensitätsverteilung der dabei an den Lichtwellenleitern auftretenden Glühemission gemessen und
mit einer ortsaufgelösten Referenz-Intensitätsverteilung verglichen wird,
im Fall einer Abweichung der Entladungsstrom so nachgeregelt wird, daß sich die Ist-Intensitätsverteilung der Referenz-Intensitätsverteilung annähert,
**dadurch gekennzeichnet,**
**daß** der Ist-Intensitätsverteilung und der Referenz-Intensitätsverteilung Grauwerte zugeordnet werden und
**daß** die Grauwerte entlang der Richtung der Achsen der beiden Lichtwellenleiter (1,3) ausgewertet werden,
**daß** für die Referenz-Intensitätsverteilung eine Referenz-Position (x1) in der Richtung der beiden Lichtwellenleiter (1,3) abgespeichert wird, bei der ein vorgegebener Grauwert erreicht wird,
**daß** beim Spleißen eine dabei erzielte Ist-Position (x2), bei der der vorgegebene Grauwert erreicht wird, mit der Referenz-Position (x1) verglichen wird und
**daß** im Fall einer Abweichung der Entladungsstrom so geregelt wird, daß sich die Ist-Position (x2) der Referenz-Position (x1) zumindest annähert.

2. Verfahren zum Spleißen von Lichtwellenleitern (1,3) nach Anspruch 1,
**dadurch gekennzeichnet,**
**daß** der nachgeregelte Entladungsstrom als voreingestellter Entladungsstrom für folgende Spleißvorgänge abgespeichert wird.

3. Verfahren zum Spleißen von Lichtwellenleitern (1,3) nach einem der Ansprüche 1 bis 2,
**dadurch gekennzeichnet,**
**daß** beim Einschalten des Entladungsstroms zeitliche Ist-Abfolge der Intensitätsverteilungen der Abbildungen der Enden abgespeichert, und mit einer abgespeicherten Referenzabfolge der Intensitätsverteilungen verglichen wird und
**daß** im Fall einer Abweichung der Entladungsstrom so geregelt wird, daß sich die Ist-Abfolge der Referenzabfolge zumindest annähert.

4. Verfahren zum Spleißen von Lichtwellenleitern (1,3) nach Anspruch 3,
**dadurch gekennzeichnet,**
**daß** die zeitliche Ist-Abfolge und die Referenzabfolge durch das Einsetzen des Entladungsstroms getriggert werden.

5. Spleißvorrichtung zum Spleißen von Lichtwellenleitern (1,3), insbesondere zur Durchführung eines der Verfahren nach einem der Ansprüche 1 bis 4, mit mindestens zwei Elektroden (6), mit Haltevorrichtungen (2,4) für die Lichtwellenleiter (1,3), mit einer Stromquelle (10) zum Zünden einer Bogenentladung zwischen den Elektroden (6), mit einem Sollwertgeber (11) für die Stromquelle (10) zum Einstellen eines voreingestellten Entladungsstroms, und mit einem Sensor (8) zur Erfassung einer beim Spleißen auftretenden ortsaufgelösten Ist-Intensitätsverteilung, **gekennzeichnet dadurch, daß** der Sensor (8) eine Schwarzweiß-Kamera ist, welche derart ausgebildet ist, daß der Ist-Intensitätsverteilung Grauwerte zugeordnet werden, und durch
eine Speichereinrichtung (13) zum Abspeichern von Grauwerten einer ortsaufgelösten Referenz-Intensitätsverteilung,
eine Vergleichseinrichtung (14) zum Vergleichen der Grauwerte der Ist-Intensitätsverteilung mit den Grauwerten der Referenz-Intensitätsverteilung, wobei die Vergleichseinrichtung (14) derart ausgebildet ist, daß die Grauwerte entlang der Richtung der beiden Lichtwellenleiter miteinander verglichen werden und
eine Regeleinrichtung (12) zur Nachregelung des Entladungsstroms.

6. Spleißvorrichtung zum Spleißen von Lichtwellenleitern (1,3) nach Anspruch 5,
**dadurch gekennzeichnet,**
**daß** der Sensor (8) auch zur Erfassung der Lage der Lichtwellenleiter (1,3) in den Haltevorrichtung (2,4) ausgebildet ist.

## Claims

1. Method for splicing optical conductors (1, 3) using an arc discharge between two electrodes which is controlled by a discharge current, in which the arc discharge is struck in the case of a preset discharge current, a spatially resolved actual intensity distribution of the thermonic emission occurring in the process at the optical conductors is measured and compared with a spatially resolved reference intensity distribution, in the case of a deviation the discharge current is corrected such that the actual intensity distribution approaches the reference intensity distribution, **characterized in that** the actual intensity distribution and the reference intensity distribution are assigned gray-scale values, and **in that** the gray-scale values are evaluated along the direction of the axes of the two optical conductors (1, 3), **in that** a reference position (x1) in the direction of the two optical conductors (1, 3) in the case of which a prescribed gray-scale value is reached is stored for the reference intensity distribution, **in that** during splicing an actual position (x2) which is attained in the process and in the case of which the prescribed gray-scale value is reached is compared with the reference position (x1), and **in that** in the case of a deviation the discharge current is controlled such that the actual position (x2) at least approaches the reference position (x1).

2. Method for splicing optical conductors (1, 3) according to Claim 1, **characterized in that** the corrected discharge current is stored as preset discharge current for following splicing operations.

3. Method for splicing optical conductors (1, 3) according to either of Claims 1 and 2, **characterized in that** on switching on the discharge current a temporal actual sequence of the intensity distributions of the images of the ends is stored and is compared with a stored reference sequence of the intensity distributions, and **in that** in the case of a deviation the discharge current is controlled such that the actual sequence at least approaches the reference sequence.

4. Method for splicing optical conductors (1, 3) according to Claim 3, **characterized in that** the temporal actual sequence and the reference sequence are triggered by applying the discharge current.

5. Splicing device for splicing optical conductors (1, 3), in particular for carrying out one of the methods according to one of Claims 1 to 4, having at least two electrodes (6), having holding devices (2, 4) for the optical conductors (1, 3), having a current source (10) for striking an arc discharge between the electrodes (6), having a setpoint generator (11) for the current source (10) for the purpose of setting a preset discharge current, and having a sensor (8) for detecting a spatially resolved actual intensity distribution occurring during splicing, **characterized in that** the sensor (8) is a black and white camera which is designed in such a way that the actual intensity distribution is assigned gray-scale values, and **characterized by** a storage device (13) for storing gray-scale values of a spatially resolved reference intensity distribution, a comparator (14) for comparing the gray-scale values of the actual intensity distribution with the gray-scale values of the reference intensity distribution, the comparator (14) being designed in such a way that the gray-scale values are compared with one another along the direction of the two optical conductors, and a controller (12) for correcting the discharge current.

6. Splicing device for splicing optical conductors (1, 3) according to Claim 5, **characterized in that** the sensor (8) is also designed to detect the position of the optical conductors (1, 3) in the holding device (2, 4).

## Revendications

1. Procédé d'épissurage de guides d'ondes (1, 3) grâce à une décharge en arc entre deux électrodes commandée par un courant de décharge,
la décharge en arc étant amorcée avec un courant de décharge présélectionné,
une répartition effective de l'intensité, résolue localement, de l'émission thermoélectronique se produisant à ce moment au niveau des guides d'ondes étant mesurée et comparée à une répartition de référence de l'intensité résolue localement,
le courant de décharge faisant l'objet, en cas d'écart, d'un réglage ultérieur de manière à ce que la répartition effective de l'intensité s'approche de la répartition de référence de l'intensité,
**caractérisé en ce que**
des valeurs de gris sont associées à la répartition effective de l'intensité et à la répartition de référence de l'intensité, et **en ce que** les valeurs de gris sont analysées le long de la direction des axes des deux guides d'onde (1, 3),
**en ce que**, pour la répartition de référence de l'intensité, une position de référence (x1) dans la direction des deux guides d'ondes (1, 3) est mémorisée, position dans laquelle une valeur de gris prédéfinie est atteinte,
**en ce que**, lors de l'épissurage, une position effective (x2) obtenue, dans laquelle la valeur de gris prédéfinie est atteinte, est comparée à la position de référence (x1), et
**en ce que**, en cas d'écart, le courant de décharge est réglé de manière à ce que la position effective (x2) s'approche au moins de la position de référence (x1).

2. Procédé d'épissurage de guides d'ondes (1, 3) selon la revendication 1, **caractérisé en ce que** le courant de décharge ayant fait l'objet d'un réglage ultérieur est mémorisé en tant que courant de décharge présélectionné pour les opérations d'épissurage suivantes.

3. Procédé d'épissurage de guides d'ondes (1, 3) selon l'une des revendications 1 à 2, **caractérisé en ce que**, lors de l'activation du courant de décharge, une séquence chronologique effective des répartitions de l'intensité des images des extrémités est mémorisée et comparée à une séquence de référence des répartitions de l'intensité qui est en mémoire, et
**en ce que**, en cas d'écart, le courant de décharge est réglé de manière à ce que la séquence effective s'approche au moins de la séquence de référence.

4. Procédé d'épissurage de guides d'ondes (1, 3) selon la revendication 3, **caractérisé en ce que** la séquence chronologique effective et la séquence de référence sont déclenchées par l'application du courant de décharge.

5. Dispositif d'épissurage pour l'épissurage de guides d'ondes (1, 3), notamment pour l'exécution de l'un des procédés selon l'une des revendications 1 à 4, comprenant au moins deux électrodes (6), des dispositifs de maintien (2, 4) pour les guides d'ondes (1, 3), une source de courant (10) pour l'amorçage d'une décharge en arc entre les électrodes (6), un générateur de valeur de consigne (11) pour la source de courant (10) afin de régler un courant de décharge présélectionné, et comprenant un capteur (8) pour la saisie d'une répartition effective de l'intensité résolue localement apparaissant lors de l'épissurage, **caractérisé en ce que** le capteur (8) est une caméra noir et blanc qui est exécutée de manière à ce que des valeurs de gris soient associées à la répartition effective de l'intensité, et **caractérisé par**
un dispositif de mémoire (13) pour la mémorisation des valeurs de gris d'une répartition de référence de l'intensité résolue localement,
un dispositif comparateur (14) pour comparer les valeurs de gris de la répartition effective de l'intensité aux valeurs de gris de la répartition de référence de l'intensité, le dispositif comparateur (14) étant exécuté de manière à ce que les valeurs de gris soient comparées les unes aux autres le long de la direction des deux guides d'ondes, et
un dispositif de réglage (12) pour le réglage ultérieur du courant de décharge.

6. Dispositif d'épissurage pour l'épissurage de guides d'ondes (1, 3) selon la revendication 5, **caractérisé en ce que** le capteur (8) est exécuté également pour la saisie de la position des guides d'ondes (1, 3) dans les dispositifs de maintien (2, 4).
